(19) Europäisches Patentamt / European Patent Office / Office européen des brevets

(11) **EP 4 269 355 A1**

(12) **EUROPEAN PATENT APPLICATION**
published in accordance with Art. 153(4) EPC

(43) Date of publication:
**01.11.2023 Bulletin 2023/44**

(21) Application number: **21910684.6**

(22) Date of filing: **20.12.2021**

(51) International Patent Classification (IPC):
***C01G 33/00*** *(2006.01)*

(52) Cooperative Patent Classification (CPC):
**C01G 33/00**

(86) International application number:
**PCT/JP2021/046954**

(87) International publication number:
**WO 2022/138539 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2020 JP 2020216109**

(71) Applicant: **Mitsui Mining & Smelting Co., Ltd.
Shinagawa-ku
Tokyo 141-8584 (JP)**

(72) Inventors:
• **ARAKAWA, Daiki
Omuta-shi, Fukuoka 836-0003 (JP)**
• **HARA, Syuhei
Omuta-shi, Fukuoka 836-0003 (JP)**

(74) Representative: **Novagraaf Technologies
Bâtiment O2
2, rue Sarah Bernhardt
CS90017
92665 Asnières-sur-Seine Cedex (FR)**

(54) **NIOBIUM ACID COMPOUND DISPERSION AND METHOD FOR MANUFACTURING SAME**

(57) The present invention provides, with respect to a polyoxo niobate compound dispersion in which a polyoxo niobate compound is dispersed in an organic solvent, a novel polyoxo niobate compound dispersion in which a polyoxo niobate compound is dispersed or dissolved in an organic solvent even when it contains substantially no organic substance having a volatilization temperature of 200°C or higher and halogen elements.

A polyoxo niobate compound dispersion comprising a part or all of a polyoxo niobate compound dispersed or dissolved in a mixed solvent using a lower alcohol and water as a main solvent and containing a primary amine, a secondary amine, a tertiary amine, a quaternary ammonium compound, or two or more of them (also referred to as "amine compound solvent"), wherein the content of water is 5.0% by mass or more, the content of the amine compound solvent is 0.50 or more in terms of a molar ratio relative to the content of niobium (Nb), and the lower alcohol accounts for 70% by mass or more of a contained component (referred to as "remaining portion") other than a component derived from the polyoxo niobate compound, a component derived from the amine compound solvent, and water.

EP 4 269 355 A1

**Description**

**TECHNICAL FIELD**

The present invention relates to a polyoxo niobate compound dispersion in which a polyoxo niobate compound is dispersed and/or dissolved in an organic solvent, and a method for producing the same.

**BACKGROUND ART**

Polyoxo niobate compounds containing niobium (Nb) and oxygen (O), such as niobium oxides, niobium hydroxides, and polyacids of niobium, are known. These compounds are used, for example, as raw materials and additives for optics and electronics.

These compounds are also being studied as catalysts because of the solid acidity of polyoxo niobate. For example, Non Patent Literature 1 reports that among metal oxide clusters $[M_xO_y]^{n-}$, known as polyacids, those of Group 5 elements such as Nb have particularly excellent base catalytic activity.

Furthermore, niobium oxides have a high refractive index and dielectric constant. Therefore, in recent years, polyoxo niobate compound dispersions in which fine particles composed of a polyoxo niobate compound are dispersed in a dispersion medium have attracted attention in the field of optoelectronic materials, such as semiconductor materials, surface protective agents, anti-reflection agents, refractive index adjusters, and catalysts, and are being developed.

Such polyoxo niobate compound dispersions can be coated, for example, on the surface of various parts and dried to impart desired functions to the parts. Among them, polyoxo niobate compound organo-dispersions containing a polyoxo niobate compound dispersed in an organic solvent are characterized by high film-forming properties because they can be formed into films on resins or other materials and have excellent volatility.

With respect to this type of polyoxo niobate compound dispersions, for example, Patent Literature 1 discloses a method for producing a polyoxo niobate sol having high compatibility with hydrophilic solvents, wherein the method includes washing an ammonium niobate sol mixed with an inorganic acid to remove ammonia, heating in the presence of an amine compound to remove ammonia, and further adding an organic acid.

Patent Literature 2 discloses a polyoxo niobate organosol that contains fine particles having polyoxo niobate as a main component and a stabilizer and that satisfies $NH_3/Nb_2O_5$ (molar ratio) < 1.0 when containing ammonia as an optional component, and also discloses a method for producing the same including a step of preparing a mixed liquid containing fine particles containing polyoxo niobate as a main component, a stabilizer such as an amine salt-based cationic surfactant or a quaternary ammonium compound salt-based cationic surfactant, and an amine compound in the presence of water, and a step of obtaining the organosol by solvent substitution of the mixed liquid obtained in the above step.

**CITATION LIST**

NON PATENT LITERATURE

Non Patent Literature 1: "Base Catalytic Applications of Multivalent Anion Metal Oxide Clusters" by Seiji Yamazoe, 2018, The Chemical Society of Japan

PATENT LITERATURE

    Patent Literature 1: Japanese Patent Application Laid-Open No. 2015-081220
    Patent Literature 2: Japanese Patent Application Laid-Open No. 2018-127392

**SUMMARY OF THE INVENTION**

PROBLEM TO BE SOLVED BY THE INVENTION

As described above, many of the conventionally disclosed polyoxo niobate compound dispersions contain organic substances and halogens that are difficult to volatilize, as stabilizers. Therefore, when the polyoxo niobate compound dispersions are coated on the surface of various parts and then dried at a low temperature to form a film, there is a problem of remaining these components in the surface film.

In addition, when the polyoxo niobate compound dispersions contain an organic acid as in Patent Literature 1, they cannot be used for some applications for which the organic acid is unsuitable.

Accordingly, the present invention is intended to provide, with respect to a polyoxo niobate compound dispersion containing a polyoxo niobate compound dispersed in an organic solvent, a novel polyoxo niobate compound dispersion in which a polyoxo niobate compound is dispersed or dissolved in an organic solvent even when it contains substantially no organic substance having a volatilization temperature of 200°C or higher and halogen elements, and a method for producing the same.

MEANS FOR SOLVING PROBLEM

The present invention proposes a polyoxo niobate compound dispersion containing a part or all of a polyoxo niobate compound dispersed or dissolved in a mixed solvent using a lower alcohol and water as a main solvent and containing a primary amine, a secondary amine, a tertiary amine, a quaternary ammonium compound, or two or more of them (also referred to as "amine compound solvent"),
wherein the content of water is 5.0% by mass or more, the content of the amine compound solvent is 0.50 or more in terms of a molar ratio relative to the content of niobium (Nb), and the lower alcohol accounts for 70% by mass or more of a contained component (referred to as "remaining portion") other than a component derived from the polyoxo niobate compound (referred to as "polyoxo niobate compound-derived component"), a component derived from the amine compound solvent (referred to as "amine compound solvent-derived component"), and water.

The present invention also proposes a method for producing a polyoxo niobate compound dispersion including mixing a polyoxo niobate compound (referred to as "precursor"), which is a compound containing polyoxo niobate and ammonium ions, a lower alcohol and/or water, and the amine compound solvent.

EFFECT OF THE INVENTION

The polyoxo niobate compound alone is difficult to disperse and/or dissolve in a solvent composed of a lower alcohol and water. However, by using the solvent as the main solvent and adding the amine compound solvent thereto, the polyoxo niobate compound can be dispersed and/or dissolved.

Thus, according to the polyoxo niobate compound dispersion and the production method proposed by the present invention, a novel polyoxo niobate compound dispersion can be provided in which a polyoxo niobate compound is dispersed or dissolved in an organic solvent even when it contains substantially no organic substance having a volatilization temperature of 200°C or higher and halogen elements.

Such a polyoxo niobate compound dispersion can be effectively used in various fields such as semiconductor materials, surface protective agents, anti-reflection agents, refractive index adjusters, and catalysts. It can also be used as a raw material for various materials.

MODE(S) FOR CARRYING OUT THE INVENTION

Next, the present invention will be described based on exemplary embodiments. However, the present invention is not limited to the embodiments described below.

<<Present Polyoxo niobate Compound Dispersion>>

The polyoxo niobate compound dispersion according to an example of the embodiment of the present invention (referred to as "present polyoxo niobate compound dispersion") is a dispersion or solution in which a part or all of a polyoxo niobate compound (referred to as "present polyoxo niobate compound") is dispersed or dissolved in a mixed solvent (referred to as "present mixed solvent") using a lower alcohol and water as a main solvent and containing a primary amine, a secondary amine, a tertiary amine, a quaternary ammonium compound, or two or more of them, i.e., an amine compound solvent.

In the present invention, the phrase "the polyoxo niobate compound is dispersed in the present mixed solvent" means a state where particles composed of the polyoxo niobate compound are uniformly dispersed without precipitation.

On the other hand, the phrase "the polyoxo niobate compound is dissolved in the present mixed solvent" means a state where the polyoxo niobate compound is dissolved in the present mixed solvent to become transparent.

From the viewpoint of the dispersibility and light transmissivity of the polyoxo niobate compound particles in the present polyoxo niobate compound dispersion, the light transmittance at a wavelength of 400 nm is preferably 65% or more, more preferably 80% or more, even more preferably 90% or more, still more preferably 95% or more, and particularly preferably 99% or more.

The state where "the polyoxo niobate compound is dissolved in the present mixed solvent (to become transparent)" means that theoretically the light transmittance at a wavelength of 400 nm is 100%, but practically the light transmittance at a wavelength of 400 nm of 99.5% or more can be considered as transparent.

The state where "a part or all of the polyoxo niobate compound is dispersed or dissolved in the present mixed solvent" can be determined by compositional analysis, visual observation, and light transmittance measurement of the polyoxo niobate compound dispersion.

The present polyoxo niobate compound dispersion may be in liquid, suspension (sol), or paste form.

<Present Polyoxo niobate Compound>

The present polyoxo niobate compound may be a compound containing polyoxo niobate. Examples thereof include compounds composed of Nb, O, and H or composed of Nb, O, H, and N. Among them, for example, ammonium niobate or a salt thereof is preferred from the viewpoint of excellent dispersibility and/or solubility in the present mixed solvent. However, it is not limited to these compounds.

Among them, the present polyoxo niobate compound is preferably a compound having a polyacid structure from the viewpoint of excellent dispersibility and/or solubility in the present mixed solvent.

Among them, the present polyoxo niobate compound is preferably a compound composed of a niobium polyacid and ammonium ions from the viewpoint of excellent dispersibility and/or solubility in the present mixed solvent. For example, it is preferably a hydrous compound having a structure represented by the formula: $[Nb_xO_y]^{n-}\cdot mH_2O$ ($6 \leq x \leq 10$, $19 \leq y \leq 28$, $n = 6$, and m represents an integer of 0 to 50). Specific examples thereof include a hydrous compound having a structure represented by the formula: $[Nb_6O_{19}]^{6-}\cdot mH_2O$. However, it is not limited to these hydrous compounds.

The present polyoxo niobate compound, when it is a compound containing polyoxo niobate and ammonium ions, preferably has a molar ratio of the content of ammonium ions to the content of niobium (Nb) ($NH_4^+/Nb$) of 0.50 or more from the viewpoint of further improving the dispersibility and/or solubility of the present polyoxo niobate compound.

From such a viewpoint, the molar ratio is more preferably 0.55 or more, even more preferably 0.58 or more, and particularly preferably 0.60 or more. In addition, the upper limit of the molar ratio ($NH_4^+/Nb$) is 20 or less from the viewpoint of not interfering with the effect of the amine compound solvent.

The content of niobium (Nb) and the content of ammonium ions ($NH_4^+$) can be determined from the polyoxo niobate compound dispersion.

The content of niobium (Nb) can be determined by the gravimetric method as follows: a part of the polyoxo niobate compound dispersion is dried at 110°C for 24 hours and then calcined at 1,000°C for 4 hours to form $Nb_2O_5$; the concentration of $Nb_2O_5$ contained in the polyoxo niobate compound dispersion is calculated from the mass; and the content of Nb is calculated from the concentration of $Nb_2O_5$. Specifically, the calculated $Nb_2O_5$ concentration (mass concentration) can be converted to a molar concentration of Nb by dividing it by 132.9, which is 1/2 the molecular weight of $Nb_2O_5$.

The content of ammonium ions ($NH_4^+$) can be determined, for example, by the Kjeldahl method as follows: the total content of ammonia nitrogen, primary to tertiary amine nitrogen, and quaternary ammonium nitrogen in the polyoxo niobate compound dispersion is determined; the content of primary to tertiary amine nitrogen and quaternary ammonium nitrogen in the polyoxo niobate compound dispersion is determined, for example, by the method described below; subtracting the latter content from the former content; when the content is calculated in terms of molar concentration, using the value as it is; and when the content is calculated in terms of mass concentration, dividing the value by 14.01, which is the atomic weight of nitrogen, to convert it to the molar concentration of nitrogen (N) = molar concentration of $NH_4^+$.

The present polyoxo niobate compound is present in the present mixed solvent either as colloidal particles of the polyoxo niobate compound or as ions with a part or all of the polyoxo niobate compound dissolved.

For example, the present polyoxo niobate compound, when it is a compound containing polyoxo niobate and ammonium ions, is present in the present mixed solvent either as colloidal particles of the polyoxo niobate compound or as polyoxo niobate ions and ammonium ions.

<Present Mixed Solvent>

The present mixed solvent is a solvent using a lower alcohol and water as a main solvent.

The term "main solvent" means that the lower alcohol and water account for 50% by mass or more of the present mixed solvent. Among them, the lower alcohol and water may be considered as accounting for 60% by mass or more, 70% by mass or more, 80% by mass or more, 90% by mass or more, and 95% by mass or more (including 100% by mass) of the present mixed solvent.

The present polyoxo niobate compound dispersion preferably contains 5.0% by mass or more of water, more preferably 8.0% by mass or more, even more preferably 9.0% by mass or more, and still more preferably 10% by mass or more, from the viewpoint of improving the dispersibility and/or solubility of the present polyoxo niobate compound in the present mixed solvent.

However, when the amount of water is too large, the film formability may deteriorate. Therefore, the upper limit is preferably 95% by mass or less, more preferably 90% by mass or less, and even more preferably 85% by mass or less.

The water is usually contained in the polyoxo niobate compound-containing material obtained by removing fluorine described below, if not dried, and the amine compound solvent. Therefore, even if no water is added, the present polyoxo niobate compound dispersion contains water.

The "lower alcohol" in the present mixed solvent means an alcohol having 5 or less carbon atoms, and includes polyhydric alcohols. Examples thereof include methanol, ethanol, propanol, isopropyl alcohol, butanol, ethylene glycol, propylene glycol, and glycerin. However, it is not limited to these materials.

The present mixed solvent is a solvent using a lower alcohol and water as the main solvent and containing a primary amine, a secondary amine, a tertiary amine, a quaternary ammonium compound, or two or more of them, i.e., an amine compound solvent.

As for the amine, a primary amine, a secondary amine, a tertiary amine, a quaternary ammonium compound, or a mixture of two or more of them can be used. Among them, a primary amine, a secondary amine, a quaternary ammonium compound, or a mixture of two or more of them is preferred from the viewpoint of solubility, and among them, a primary amine, a quaternary ammonium compound, or a mixture of both is more preferred.

Specifically, preferred examples thereof include alkylamines (including quaternary alkylammonium compounds) described below, choline ($[(CH_3)_3NCH_2CH_2OH]^+$), and choline hydroxide ($[(CH_3)_3NCH_2CH_2OH]^+OH^-$).

For the alkylamines (including quaternary alkylammonium compounds), those having 1 to 4 alkyl groups can be used. Among them, those having 1, 2, or 4 alkyl groups are preferred, and those having 1 or 4 alkyl groups are more preferred.

When the alkylamine has 2 to 4 alkyl groups, the 2 to 4 alkyl groups may all be the same or may be different.

The alkyl groups of the alkylamine, from the viewpoint of solubility, are preferably alkyl groups having 1 to 6 carbon atoms, more preferably 4 or less carbon atoms, even more preferably 3 or less carbon atoms, and still more preferably 2 or less carbon atoms.

Specific examples of the alkylamine include methylamine, dimethylamine, trimethylamine, tetramethylammonium hydroxide (TMAH), ethylamine, methylethylamine, diethylamine, triethylamine, methyldiethylamine, dimethylethylamine, tetraethylammonium hydroxide (TEAH), tetrabutylammonium hydroxide (TBAH), n-propylamine, di-n-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine, tert-butylamine, n-pentaamine, and n-hexylamine.

Among them, from the viewpoint of solubility, methylamine, dimethylamine, tetramethylammonium hydroxide (TMAH), ethylamine, methylethylamine, diethylamine, and tetraethylammonium hydroxide (TEAH) are preferred; and among them, methylamine, ethylamine, tetramethylammonium hydroxide (TMAH), and tetraethylammonium hydroxide (TEAH) are more preferred. In particular, tetramethylammonium hydroxide (TMAH) is the most preferred.

One of these alkylamines may be used alone, or two or more of them may be used in combination.

Preferred examples of the quaternary ammonium compound include, in addition to the quaternary alkylammonium compound introduced as the alkylamine above, halogen-free quaternary ammonium compounds such as benzyltrimethylammonium hydroxide and choline hydroxide.

The present mixed solvent may also contain solvent components (referred to as "other solvent components") other than the main solvent and the amine compound solvent.

Examples of the other solvent components include ketones, ethers, and nitriles.

<Composition in Present Polyoxo niobate Compound Dispersion>

In the present polyoxo niobate compound dispersion, the content of the amine compound solvent is preferably 0.50 or more in terms of a molar ratio relative to the content of niobium (Nb), more preferably 0.60 or more, even more preferably 0.80 or more, and still more preferably 1.0 or more, from the viewpoint of improving the dispersibility and/or solubility of the present polyoxo niobate compound in the present mixed solvent.

From the viewpoint of ease of drying when forming a film, the molar ratio is preferably 30 or less, more preferably 20 or less, and even more preferably 10 or less.

In this case, the "content of the amine compound solvent content" includes the amount derived from the amine compound solvent as well as the amount derived from the present polyoxo niobate compound, i.e., the precursor described below.

In the present polyoxo niobate compound dispersion, the content of niobium is preferably 0.1% by mass or more in terms of $Nb_2O_5$, more preferably 0.5% by mass or more, and even more preferably 1.0% by mass or more, from the viewpoint of effective use of niobium. In addition, from the viewpoint of dispersion and/or dissolution, the content of niobium is preferably 40% by mass or less in terms of $Nb_2O_5$, more preferably 35% by mass or less, and even more preferably 30% by mass or less.

In the present polyoxo niobate compound dispersion, niobium and/or polyoxo niobate is not necessarily present in the form of $Nb_2O_5$. The reason for indicating the content of niobium and/or polyoxo niobate in terms of $Nb_2O_5$ is based

on the convention for indicating Nb concentration.

The content of niobium in the present polyoxo niobate compound dispersion can be determined by the gravimetric method, which measures the mass of $Nb_2O_5$ obtained by evaporating and drying 20 mL of the dispersion and then calcining at 1,000°C for 4 hours.

In the present polyoxo niobate compound dispersion, the content of the amine compound solvent is preferably adjusted, as appropriate, according to the content of niobium. As a guideline, the content is preferably 2.0% by mass or more, more preferably 3.0% by mass or more, and even more preferably 5.0% by mass or more, from the viewpoint of dispersibility. In addition, the content is preferably 30% by mass or less, and more preferably 20% by mass or less.

The content of the amine compound solvent in the present polyoxo niobate compound dispersion can be measured by hexane-extracted gas chromatography-mass spectrometry (GC-MS) for the primary to tertiary amines, and by direct MS method for the quaternary ammonium compound.

As an apparatus for the GC-MS, for example, JMS-Q1500GC manufactured by JEOL Ltd. can be used. As an apparatus for the direct MS method, for example, Q-Exactive manufactured by Thermo Fisher can be used.

With respect to the ratio of water to a lower alcohol in the present polyoxo niobate compound dispersion, the water content is preferably 5.5 parts by mass or more relative to 100 parts by mass of the lower alcohol content, more preferably 6.0 parts by mass or more, even more preferably 8.0 parts by mass or more, and still more preferably 10 parts by mass or more, from the viewpoint of dispersion and/or dissolution. In addition, it is preferably 1,000 parts by mass or less from the viewpoint of film formability on resins.

The lower alcohol and water contents can be measured by gas chromatography-mass spectrometry (GC-MS) using, for example, JMS-Q1500GC manufactured by JEOL Ltd.

In the present polyoxo niobate compound dispersion, the lower alcohol preferably accounts for 70% by mass or more of the contained component (referred to as "remaining portion") other than the polyoxo niobate compound-derived component, the amine compound solvent-derived component, and water.

When the lower alcohol accounts for 70% by mass or more of the remaining portion, the dispersibility or solubility, or both, can be improved.

From such a viewpoint, it is more preferable that the lower alcohol accounts for 80% by mass or more of the remaining portion, even more preferably 90% by mass or more, and still more preferably 95% by mass or more (including 100% by mass).

The "polyoxo niobate compound-derived component" means the present polyoxo niobate compound as well as a component changed by dissolving the present polyoxo niobate compound in the present mixed solvent, such as polyoxo niobate ions and ammonium ions.

The "amine compound solvent-derived component" means the present amine compound solvent as well as a component changed by the reaction of the amine compound solvent with the present polyoxo niobate compound.

The remaining portion may contain organic solvents (such as acetone) other than the lower alcohol, and various additives.

The content of the "polyoxo niobate compound-derived component" in the present polyoxo niobate compound dispersion can be determined by evaporating and drying the dispersion and calcining at 1,000°C for 4 hours to form $Nb_2O_5$, and then calculating the "polyoxo niobate compound-derived component" contained in the dispersion from the mass (gravimetric method).

The content of the "amine compound solvent-derived component" can be measured by hexane-extracted gas chromatography-mass spectrometry (GC-MS) for the primary to tertiary amines, and by direct MS method for the quaternary ammonium compound.

The present polyoxo niobate compound dispersion has one of the characteristics that it contains substantially no organic substance having a volatilization temperature of 200°C or higher, such as a stabilizer and an organic acid, and halogen elements.

The phrase "it contains substantially no organic substance having a volatilization temperature of 200°C or higher and halogen elements" means that they are not intentionally contained unless they are unintentionally contained, i.e., as unavoidable impurities.

Examples of the "stabilizer" include amine salt-based cationic surfactants and quaternary ammonium compound salt-based cationic surfactants, as described in Japanese Patent Application Laid-Open No. 2018-127392. However, it is not limited to these materials.

Examples of the amine salt-based cationic surfactants include octadecylamine, oxyethylenedodecylamine, and polyoxyethylenedodecylam ine.

Examples of the quaternary ammonium compound salt-based cationic surfactants include dialkyldimethylammonium chloride, alkyltrimethylammonium chloride, and alkyldimethylbenzylammonium chloride.

Examples of the "organic acid" include monocarboxylic acids, dicarboxylic acids, and oxycarboxylic acids as described in Patent Literature 1.

Examples of the monocarboxylic acids include formic acid, acetic acid, propionic acid, n-butyric acid, and valeric acid; examples of the dicarboxylic acids include oxalic acid, succinic acid, maleic acid, malonic acid, fumaric acid, and glutaric acid; and examples of the oxycarboxylic acids include citric acid, glycolic acid, lactic acid, tartaric acid, and malic acid.

However, it is not limited to these organic acids.

The absence of an organic substance having a volatilization temperature of 200°C or higher can be determined by ion chromatography, liquid chromatography, gas chromatography, or the like.

The absence of halogen elements can be determined by ICP light emission spectrometry (high frequency inductively coupled plasma light emission spectrometry, ICP-OES/ICP-AES), ion chromatography, or the like.

<Characteristics of Present Polyoxo niobate Compound Dispersion>

The present polyoxo niobate compound dispersion may be in a state where colloidal particles composed of the present polyoxo niobate compound are dispersed and suspended in the present mixed solvent, i.e., in a sol state, or may be in a state where the present polyoxo niobate compound is dissolved in the present mixed solvent to form a transparent liquid.

In the case where colloidal particles composed of the present polyoxo niobate compound are dispersed and suspended in the present mixed solvent, a part of the colloidal particles may be dissolved in the present mixed solvent.

(Light Transmittance)

The present polyoxo niobate compound dispersion has a light transmittance at a wavelength of 400 nm of more than 65%, preferably 70% or more, more preferably 80% or more, and even more preferably 90% or more (including 100%).

Since the polyoxo niobate compound is dispersed and/or dissolved in the present mixed solvent as described above, the present polyoxo niobate compound dispersion has a light transmittance of more than 65%.

(HSP)

From the viewpoint of improving the solubility of the present polyoxo niobate compound in the present mixed solvent, with respect to HSP values of the remaining portion other than the polyoxo niobate compound-derived component, the amine compound solvent-derived component, and water, for example, the lower alcohol and the other mixed solvent components, the present polyoxo niobate compound dispersion preferably has the following values;
dD (dispersion term) ≤ 16.0, dP (polar term) = 8.5 to 11.5, and dH (hydrogen bond term) ≥ 16.0.

From such a viewpoint, the dD (dispersion term) is more preferably 15.8 or less, and even more preferably 15.5 or less.

The dP (polar term) is more preferably 8.0 or more or 11.0 or less, and even more preferably 8.5 or more or 10.5 or less.

The dH (hydrogen bond term) is more preferably 18.5 or more, and even more preferably 19.0 or more.

The HSP values (Hansen solubility parameters) are indices of solubility, how much a substance dissolves in another substance.

The HSP values refer to solubility parameters introduced by Hildebrand, which are divided into three components of a dispersion term $\delta D$, a polar term $\delta P$, and a hydrogen bond term $\delta H$, and are represented in a three-dimensional space. The dispersion term $\delta D$ indicates the effect of dispersion force, the polar term $\delta P$ indicates the effect of dipole-dipole force, and the hydrogen bond term $\delta H$ indicates the effect of hydrogen bond force, and these are explained as follows:

dD (dispersion term) = $\delta D$: energy derived from dispersion force between molecules;
dP (polar term) = $\delta P$: energy derived from polar force between molecules; and
dH (hydrogen bond term) = $\delta H$: energy derived from hydrogen bond force between molecules,
where the unit of each is $MPa^{0.5}$.

The dispersion term reflects the van der Waals force, the polar term reflects the dipole moment, and the hydrogen bond term reflects the action of water, alcohol, and the like. Then, those with similar HSP vectors can be judged to have high solubility with each other, and the similarity of the vectors can be determined by the distances of the Hansen solubility parameters (HSP distances).

The Hansen solubility parameters can be indices not only for determining solubility, but also for determining how easily a certain substance is present in another substance, i.e., how good the dispersion is.

In the present invention, the HSP values [$\delta D$, $\delta P$, $\delta H$] can be easily estimated from its chemical structure by using, for example, computer software "Hansen Solubility Parameters in Practice (HSPiP)". Specifically, it is determined from the chemical structure by a Y-MB method implemented in the HSPiP. When the chemical structure is unknown, it is determined by a sphere method implemented in the HSPiP from the results of dissolution tests using a plurality of solvents.

The HSP values of a mixed solvent of lower alcohols and other mixed solvent components can be determined according to the mixing ratio (volume ratio) as follows.

$$[dDm, dPm, dHm] = [(a \cdot dD1 + b \cdot dD2), (a \cdot dP1 + b \cdot dP2), (a \cdot dH1 + b \cdot dH2)]/(a+b)$$

Mixing ratio is calculated by volume. (This is quoted from "HSP for Beginners (https://pirika.com/HSP/JP/Examples/Docs/4Beginner.htm)".)

(Adhesion)

The present polyoxo niobate compound dispersion can be evaluated as "pass" in the following adhesion evaluation when coated as a coating liquid as follows.

<Adhesion Evaluation>

The polyoxo niobate compound dispersion is coated once on a soda glass substrate using a spin coater, the soda glass substrate provided with the coated film is calcined at 200°C for 3 hours and cooled to 25°C, a cellophane adhesive tape having a size of 24 mm × 15 m, as described in Japanese Industrial Standards (JIS) Z1522: 2009 "Pressure sensitive adhesive cellophane tapes", is attached to the surface of the coated film, within 1 minute after rubbing the surface of the adhesive tape three times with fingertips, the edge of the adhesive tape is grasped and the adhesive tape is peeled off at an angle of 60° ± 10° and at a speed of 0.5 to 1.0 second, and the polyoxo niobate compound dispersion is evaluated as pass when the surface of the coated film is smooth and there is no peeling at all.

<Method for Producing Present Polyoxo niobate Compound Dispersion>

Next, a suitable method for producing the present polyoxo niobate compound dispersion (referred to as "present production method") will be described.

As an example of the present production method, a production method of mixing a polyoxo niobate compound (referred to as "precursor"), which is a compound containing polyoxo niobate and ammonium ions, a lower alcohol and/or water, and the amine compound solvent to obtain a polyoxo niobate compound dispersion in which the precursor is dispersed or dissolved (referred to as "dispersion step") can be cited. However, the method for producing the present polyoxo niobate compound dispersion is not limited to this production method.

As long as the present production method includes the above step, other steps or other treatments may be added as appropriate.

The polyoxo niobate compound dispersion obtained by the present production method may be finally composed of a part or all of the polyoxo niobate compound dispersed or dissolved in a mixed solvent containing a lower alcohol and/or water and the amine compound solvent.

(Precursor)

The precursor is preferably a compound containing polyoxo niobate and ammonium ions from the viewpoint of high dispersibility and/or solubility in the present mixed solvent, and the molar ratio of the content of ammonium ions to the content of niobium (Nb) ($NH_4^+$/Nb) is preferably 0.50 or more, more preferably 0.55 or more, even more preferably 0.58 or more, and still more preferably 0.60 or more. In addition, from the viewpoint of not interfering with the effect of the amine compound solvent, it is preferably 20 or less, and more preferably 10 or less.

The content of ammonium ions ($NH_4^+$) in the precursor can be measured by the same method as in the present polyoxo niobate compound. However, if it is known that the precursor does not contain primary to tertiary amines and a quaternary ammonium compound, it can be measured by the Kjeldahl method alone.

(Method for Producing Precursor)

A method for producing the precursor includes adding a niobium fluoride aqueous solution to an ammonia aqueous solution to obtain a niobium-containing precipitate (referred to as "reverse neutralization step"), and removing fluorine from the niobium-containing precipitate to obtain a polyoxo niobate compound-containing material, i.e., the precursor. However, the method for producing the precursor is not limited to this production method.

As long as the method for producing a precursor includes the above step, other steps or other treatments may be added as appropriate.

[Reverse Neutralization Step]

In the reverse neutralization step, a niobium fluoride aqueous solution is preferably added to an ammonia aqueous solution having a predetermined concentration to obtain a niobium-containing precipitate. That is, reverse neutralization is preferred.

Instead of positive neutralization, in which an ammonia aqueous solution is added to a niobium fluoride aqueous solution for neutralization, reverse neutralization, in which a niobium fluoride aqueous solution is added to an ammonia aqueous solution for neutralization, is preferred.

It is presumed that the reverse neutralization makes the polyoxo niobate structure more soluble in water.

The niobium fluoride aqueous solution can be prepared by reacting niobium or a niobium oxide with hydrofluoric acid (HF) to form niobium fluoride ($H_2NBF_7$) and dissolving the niobium fluoride ($H_2NBF_7$) in water.

Then, the niobium fluoride aqueous solution is preferably prepared by adding water (such as pure water) so as to contain 1 to 100 g/L of niobium in terms of $Nb_2O_5$. When the niobium concentration is 1 g/L or more, the polyoxo niobate compound is easily dissolved in water. Thus, the niobium concentration of the niobium fluoride aqueous solution is preferably 1 g/L or more in terms of $Nb_2O_5$, and from the viewpoint of productivity, it is more preferably 10 g/L or more, and even more preferably 20 g/L or more. In addition, when the niobium concentration is 100 g/L or less, the polyoxo niobate compound is easily dissolved in water. Thus, to more reliably synthesize a polyoxo niobate compound that is easily dissolved in water, the niobium concentration is more preferably 90 g/L or less, even more preferably 80 g/L or less, and still more preferably 70 g/L or less.

The pH of the niobium fluoride aqueous solution is preferably 2 or less, and more preferably 1 or less, from the viewpoint of complete dissolution of niobium and/or a niobium oxide.

The ammonia aqueous solution preferably has an ammonia concentration of 5.0% by mass to 30% by mass.

An ammonia concentration of 5.0% by mass or more in the ammonia aqueous solution used for reverse neutralization enables preventing Nb from remaining undissolved and completely dissolving niobium and/or polyoxo niobate in water. In addition, an ammonia concentration of 30% by mass or less in the ammonia aqueous solution is preferred because of the vicinity of the saturated aqueous solution of ammonia.

From such a viewpoint, the ammonia concentration in the ammonia aqueous solution is preferably 5.0% by mass or more, more preferably 10% by mass or more, even more preferably 15% by mass or more, still more preferably 20% by mass or more, and furthermore preferably 25% by mass or more. On the other hand, it is preferably 30% by mass or less, more preferably 29% by mass or less, and even more preferably 28% by mass or less.

In the reverse neutralization step, the amount of the niobium fluoride aqueous solution added to the ammonia aqueous solution ($NH_3$/$Nb_2O_5$ molar ratio) is preferably 95 to 300, more preferably 100 or more or 200 or less, and even more preferably 110 or more or 150 or less.

Both the niobium fluoride aqueous solution and the ammonia aqueous solution may be at room temperature.

In the reverse neutralization step, when the niobium fluoride aqueous solution is added to the ammonia aqueous solution, the neutralization reaction is preferably carried out within a period of 1 minute. That is, instead of adding the niobium fluoride aqueous solution gradually over a period of time, the niobium fluoride aqueous solution is preferably added within a period of 1 minute, for example, by adding the aqueous solution all at once, for the neutralization reaction.

In this case, the addition time of the niobium fluoride aqueous solution is preferably 1 minute or less, more preferably 30 seconds or less, and even more preferably 10 seconds or less.

[F-Washing Step]

The liquid obtained by the neutralization reaction, i.e., the niobium-containing precipitate, contains fluorine compounds such as ammonium fluoride as impurities, and it is therefore preferable to remove them to obtain a polyoxo niobate compound-containing material.

The method for removing the fluorine compounds is arbitrary. For example, methods such as reverse osmosis filtration using ammonia water or pure water, ultrafiltration, and filtration using a membrane such as microfiltration, centrifugation, and other known methods can be used.

The F-washing step may be carried out at room temperature, and each temperature adjustment is not particularly necessary.

The polyoxo niobate compound-containing material obtained by removing fluorine in the above step may then be dried as necessary. Any known drying method can be used as the drying method in this case.

However, it is preferable to leave the water in the polyoxo niobate compound-containing material because the structure and/or properties of the polyoxo niobate compound may change if the water is completely removed. In that sense, it is preferable not to dry the material after centrifugation.

(Dispersion Step)

In the dispersion step, as described above, the polyoxo niobate compound (precursor), a lower alcohol and/or water as the main solvent, and the amine compound solvent may be mixed to obtain a polyoxo niobate compound dispersion in which the polyoxo niobate compound is dispersed or dissolved.

In this case, the order of mixing the precursor, the main solvent, and the amine compound solvent is not particularly limited.

For example, the precursor may be added to a solvent using a lower alcohol and/or water as the main solvent to form a slurry, and the amine compound solvent may be added to the slurry and dispersed or dissolved to obtain a polyoxo niobate compound dispersion.

Alternatively, the amine compound solvent may be added to a solvent using a lower alcohol and/or water as the main solvent to form a mixed solvent, and the precursor may be added to the mixed solvent and dispersed or dissolved to obtain a polyoxo niobate compound dispersion.

The phrase "using a lower alcohol and/or water as the main solvent" includes the case where only a lower alcohol is used as the main solvent and the case where both a lower alcohol and water are used as the main solvent.

However, the dispersion step is not limited to these methods.

Preferably, a solvent is prepared from a lower alcohol alone or by mixing water and a lower alcohol, the precursor is added to the solvent and stirred as necessary to obtain a slurry, and the amine compound solvent is added to the slurry to prepare a polyoxo niobate compound dispersion.

In this case, as described above, even when only a lower alcohol is used as a solvent, the main solvent is composed of water and alcohol due to the water contained in the niobium compound. Also, the amine compound solvent often contains water.

The polyoxo niobate compound dispersion thus obtained is one in which a part or all of the polyoxo niobate compound is dispersed or dissolved in a mixed solvent using a lower alcohol or water as the main solvent and containing the amine compound solvent.

When the polyoxo niobate compound-containing material obtained by removing fluorine and the amine compound solvent contain water, the water is also considered to be the water in the mixed solvent of the polyoxo niobate compound dispersion.

As for the amine serving as the amine compound solvent, as described above, a primary amine, a secondary amine, a tertiary amine, a quaternary ammonium compound, or a mixture of two or more of them can be used.

Among them, a primary amine, a secondary amine, a quaternary ammonium compound, or a mixture of two or more of them is preferred from the viewpoint of solubility, and among them, a primary amine, a quaternary ammonium compound, or a mixture of both is more preferred.

Specifically, preferred examples thereof include alkylamines (including quaternary alkylammonium compounds), choline ($[(CH_3)_3NCH_2CH_2OH]^+$), and choline hydroxide ($[(CH_3)_3NCH_2CH_2OH]^+OH^-$).

For the alkylamines (including quaternary alkylammonium compounds), those having 1 to 4 alkyl groups can be used. Among them, those having 1, 2, or 4 alkyl groups are preferred, and those having 1 or 4 alkyl groups are more preferred.

When the alkylamine has 2 to 4 alkyl groups, the 2 to 4 alkyl groups may all be the same or may be different.

The alkyl groups of the alkylamine, from the viewpoint of solubility, are preferably alkyl groups having 1 to 6 carbon atoms, more preferably 4 or less carbon atoms, even more preferably 3 or less carbon atoms, and still more preferably 2 or less carbon atoms.

Specific examples of the alkylamine include methylamine, dimethylamine, trimethylamine, tetramethylammonium hydroxide (TMAH), ethylamine, methylethylamine, diethylamine, triethylamine, methyldiethylamine, dimethylethylamine, tetraethylammonium hydroxide (TEAH), tetrabutylammonium hydroxide (TBAH), n-propylamine, di-n-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine, tert-butylamine, n-pentaamine, and n-hexylamine.

Among them, from the viewpoint of solubility, methylamine, dimethylamine, tetramethylammonium hydroxide (TMAH), ethylamine, methylethylamine, diethylamine, and tetraethylammonium hydroxide (TEAH) are preferred; and among them, methylamine, ethylamine, tetramethylammonium hydroxide (TMAH), and tetraethylammonium hydroxide (TEAH) are more preferred. In particular, tetramethylammonium hydroxide (TMAH) is the most preferred.

Preferred examples of the quaternary ammonium compound include, in addition to the quaternary alkylammonium compound introduced as the alkylamine above, halogen-free quaternary ammonium compounds such as benzyltrimethylammonium hydroxide and choline hydroxide.

When the main solvent is prepared by mixing water and a lower alcohol, with respect to the mixing ratio of the water content to the lower alcohol content, the water content is preferably 5.5 parts by mass or more relative to 100 parts by mass of the lower alcohol content, more preferably 6.0 parts by mass or more, even more preferably 8.0 parts by mass or more, and still more preferably 10 parts by mass or more, from the viewpoint of dispersibility. In addition, from the viewpoint of film formability on resins, the water content is preferably 1,000 parts by mass or less.

<Applications of Present Polyoxo niobate Compound Dispersion>

The present polyoxo niobate compound dispersion can be used as a coating liquid for applications such as building materials made of glass, resin, metal plates, oxides, carbides, nitrides, and sulfides, automobile members, electronic device housings, semiconductor materials, films, pigments, and catalysts. However, the applications of the present polyoxo niobate compound dispersion are not limited to the coating liquid.

<Explanation of Terms and Phrases>

In the case of being expressed as the term "X to Y" (X and Y are arbitrary numbers) in the present specification, unless otherwise stated, the term includes the meaning of "preferably more than X" or "preferably less than Y" along with the meaning "X or more and Y or less".

Furthermore, in the case of being expressed as the term "X or more" (X is an arbitrary number) or the term "Y or less" (Y is an arbitrary number), the term also includes the intention of being "preferably more than X" or "preferably less than Y".

**EXAMPLES**

The present invention will be further described based on the following Examples. However, the present invention is not limited to the following Examples.

**(Example 1)**

Niobium pentoxide in an amount of 100 g was dissolved in 200 g of a 55% by mass hydrofluoric acid aqueous solution, and 1,830 mL of ion-exchanged water was added therein to obtain a niobium fluoride aqueous solution containing 50 g/L of niobium in terms of $Nb_2O_5$ ($Nb_2O_5$ = 4.69% by mass).

The niobium fluoride aqueous solution in an amount of 400 mL was added to 1 L of ammonia water ($NH_3$ concentration of 25% by mass) in a period of less than 1 minute to obtain a reaction solution (pH 11). This reaction solution was a polyoxo niobate compound hydrate slurry, or in other words, a niobium-containing precipitate slurry.

Next, the reaction solution was decanted using a centrifuge, and washed until the amount of free fluorine in the supernatant was 100 mg /L or less to obtain a fluorine-removed polyoxo niobate compound-containing material (precursor-containing material).

The water content of the polyoxo niobate compound-containing material (precursor-containing material) was 35.3% by mass.

The polyoxo niobate compound-containing material (precursor-containing material) had a molar ratio of the content of ammonium ions to the content of niobium (Nb) ($NH_4^+$/Nb) of 0.8.

The content of Nb was determined as follows: a part of the polyoxo niobate compound-containing material was dried at 110°C for 24 hours and then calcined at 1,000°C for 4 hours to form $Nb_2O_5$; the concentration of $Nb_2O_5$ contained in the polyoxo niobate compound was calculated from the mass; and the content of Nb was calculated from the concentration of $Nb_2O_5$.

The content of ammonium ions was measured by the Kjeldahl method.

Ethanol (water content of 0.5% by mass) in an amount of 48.4 g was added to 13.2 g of the fluorine-removed polyoxo niobate compound-containing material (precursor-containing material) and stirred, and then 8.4 g of a tetramethylammonium hydroxide pentahydrate (amine compound solvent, i.e., TMAH concentration of 50% by mass, water content of 50% by mass, "amine compound solvent-containing material" in Table 1) was added and stirred to have a tetramethylammonium hydroxide concentration of 6.0% by mass, thereby preparing a slurry containing 10% by mass of niobium in terms of $Nb_2O_5$. The slurry was stirred for 24 hours to obtain a polyoxo niobate compound dispersion (sample). The water content of the polyoxo niobate compound dispersion (sample) was 13.0% by mass.

Since the tetramethylammonium hydroxide pentahydrate and the polyoxo niobate compound-containing material contained water, the polyoxo niobate compound dispersion (sample) obtained in Example 1 was a polyoxo niobate compound dispersion in which a part or all of the polyoxo niobate compound was dispersed or dissolved in a mixed solvent using a lower alcohol and water as the main solvent and containing tetramethylammonium hydroxide as the amine compound solvent.

**(Example 2)**

A polyoxo niobate compound dispersion (sample) was obtained in the same manner as in Example 1, except that instead of adding ethanol (water content of 0.5% by mass) to the polyoxo niobate compound-containing material (precursor-containing material) in Example 1, a solvent containing ethanol (water content of 0.5% by mass) and pure water at a mass ratio of 11.3 : 13.1 was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 4.0% by mass, thereby preparing a slurry containing 10% by mass of niobium in terms of $Nb_2O_5$. The water content of the polyoxo niobate compound dispersion (sample) was 50.1% by mass.

**(Example 3)**

A polyoxo niobate compound dispersion (sample) was obtained in the same manner as in Example 1, except that instead of adding ethanol (water content of 0.5% by mass) to the polyoxo niobate compound-containing material (precursor-containing material) in Example 1, a solvent containing ethanol (water content of 0.5% by mass) and pure water at a mass ratio of 26.3 : 29.1 was added to the polyoxo niobate compound-containing material (precursor-containing material) and stirred, and then a methylamine aqueous solution (methylamine concentration of 40% by mass, water content of 60% by mass) was added and stirred to have a methylamine concentration of 10.0% by mass, thereby preparing a slurry containing 10% by mass of niobium in terms of $Nb_2O_5$. The water content of the polyoxo niobate compound dispersion (sample) was 51.6% by mass.

**(Example 4)**

A polyoxo niobate compound dispersion (sample) was obtained in the same manner as in Example 1, except that instead of adding 48.4 g of ethanol (water content of 0.5% by mass) to the polyoxo niobate compound-containing material (precursor-containing material) and stirring in Example 1, 40.8 g of ethanol (water content of 0.5% by mass) was added to the polyoxo niobate compound-containing material (precursor-containing material) and stirred, and then a tetraethylammonium hydroxide pentahydrate (TEAH concentration of 35% by mass, water content of 65% by mass) was added and stirred to have a tetraethylammonium hydroxide concentration of 8.0% by mass, thereby preparing a slurry containing 10% by mass of niobium in terms of $Nb_2O_5$. The water content of the polyoxo niobate compound dispersion (sample) was 21.8% by mass.

**(Example 5)**

A polyoxo niobate compound dispersion (sample) was obtained in the same manner as in Example 1, except that instead of adding ethanol (water content of 0.5% by mass) to the polyoxo niobate compound-containing material (precursor-containing material) in Example 1, a solvent containing isobutyl alcohol (water content of 1.0% by mass) and methanol (water content of 0.2% by mass) at a mass ratio of 42.4 : 24.7 was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 7.0% by mass, thereby preparing a slurry containing 10% by mass of niobium in terms of $Nb_2O_5$. The water content of the polyoxo niobate compound dispersion (sample) was 14.1% by mass.

As in Example 1, since the tetramethylammonium hydroxide pentahydrate and the polyoxo niobate compound-containing material contained water, the polyoxo niobate compound dispersion (sample) obtained in Example 5 was a polyoxo niobate compound dispersion in which a part or all of the polyoxo niobate compound was dispersed or dissolved in a mixed solvent using a lower alcohol and water as the main solvent and containing tetramethylammonium hydroxide as the amine compound solvent.

(Example 6)

A polyoxo niobate compound dispersion (sample) was obtained in the same manner as in Example 1, except that instead of adding ethanol to the polyoxo niobate compound-containing material (precursor-containing material) in Example 1, a solvent containing isobutyl alcohol (water content of 1.0% by mass), ethylene glycol (water content of 0.5% by mass), and methanol (water content of 0.2% by mass) at a mass ratio of 34.6 : 5.6 : 29.0 was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 5.0% by mass, thereby preparing a slurry containing 10% by mass of niobium in terms of $Nb_2O_5$. The water content of the polyoxo niobate compound dispersion (sample) was 12.1% by mass.

As in Example 1, since the tetramethylammonium hydroxide pentahydrate and the polyoxo niobate compound-containing material contained water, the polyoxo niobate compound dispersion (sample) obtained in Example 6 was a polyoxo niobate compound dispersion in which a part or all of the polyoxo niobate compound was dispersed or dissolved in a mixed solvent using a lower alcohol and water as the main solvent and containing tetramethylammonium hydroxide as the amine compound solvent.

(Example 7)

A polyoxo niobate compound dispersion (sample) was obtained in the same manner as in Example 1, except that instead of adding ethanol (water content of 0.5% by mass) to the polyoxo niobate compound-containing material (precursor-containing material) in Example 1, a solvent containing ethanol (water content of 0.5% by mass) and pure water at a mass ratio of 21.4 : 39.7 was added to the polyoxo niobate compound-containing material (precursor-containing material) and stirred, and then a dimethylamine aqueous solution (dimethylamine concentration of 50% by mass, water content of 50% by mass) was added and stirred to have a dimethylamine concentration of 10.0% by mass, thereby preparing a slurry containing 10% by mass of niobium in terms of $Nb_2O_5$. The water content of the polyoxo niobate compound dispersion (sample) was 56.5% by mass.

(Example 8)

A polyoxo niobate compound dispersion (sample) was obtained in the same manner as in Example 1, except that instead of adding ethanol (water content of 0.5% by mass) to the polyoxo niobate compound-containing material (precursor-containing material) in Example 1, a solvent containing ethanol (water content of 0.5% by mass) and pure water at a mass ratio of 5.7 : 7.7 was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 15.0% by mass, thereby preparing a slurry containing 30% by mass of niobium in terms of $Nb_2O_5$. The water content of the polyoxo niobate compound dispersion (sample) was 42.7% by mass.

(Example 9)

A polyoxo niobate compound dispersion (sample) was obtained in the same manner as in Example 1, except that instead of adding ethanol (water content of 0.5% by mass) to the polyoxo niobate compound-containing material (precursor-containing material) in Example 1, a solvent containing ethanol (water content of 0.5% by mass), acetone (water content of 0.5% by mass), and pure water at a mass ratio of 49.0 : 4.7 : 14.0 was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 0.7% by mass, thereby preparing a slurry containing 1.0% by mass of niobium in terms of $Nb_2O_5$. The water content of the polyoxo niobate compound dispersion (sample) was 8.5% by mass.

**(Comparative Example 1)**

A polyoxo niobate compound-containing liquid (sample) was obtained in the same manner as in Example 1, except that instead of adding ethanol to the polyoxo niobate compound-containing material (precursor-containing material) in Example 1, methyl ethyl ketone (water content of 1% by mass) was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 5.0% by mass, thereby preparing a slurry containing 10% by mass of niobium in terms of $Nb_2O_5$. The water content of the polyoxo niobate compound-containing liquid (sample) was 12.4% by mass.

**(Comparative Example 2)**

A polyoxo niobate compound-containing liquid (sample) was obtained in the same manner as in Example 1, except that instead of adding ethanol (water content of 0.5% by mass) to the polyoxo niobate compound-containing material (precursor-containing material) in Example 1, acetone (water content of 1% by mass) was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 5.0% by mass, thereby preparing a slurry containing 10% by mass of niobium in terms of $Nb_2O_5$. The water content of the polyoxo niobate compound-containing liquid (sample) was 12.0% by mass.

**(Comparative Example 3)**

A polyoxo niobate compound-containing liquid (sample) was obtained in the same manner as in Example 1, except that 52.6 g of ethanol (water content of 0.5% by mass) was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 3.0% by mass, thereby preparing a slurry containing 10% by mass of niobium in terms of $Nb_2O_5$. The water content of the polyoxo niobate compound-containing liquid (sample) was 10.0% by mass.

**(Comparative Example 4)**

A polyoxo niobate compound dispersion (sample) was obtained in the same manner as in Example 1, except that instead of adding ethanol (water content of 0.5% by mass) to the polyoxo niobate compound-containing material (precursor-containing material) in Example 1, a solvent containing ethanol (water content of 0.5% by mass), acetone (water content of 0.5% by mass), and pure water at a mass ratio of 48.0 : 1.7 : 18.0 was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 0.7% by mass, thereby preparing a slurry containing 1.0% by mass of niobium in terms of $Nb_2O_5$. The water content of the polyoxo niobate compound dispersion (sample) was 4.3% by mass.

**(Comparative Example 5)**

A polyoxo niobate compound dispersion (sample) was obtained in the same manner as in Example 1, except that instead of adding ethanol (water content of 0.5% by mass) to the polyoxo niobate compound-containing material (precursor-containing material) in Example 1, a solvent containing ethanol (water content of 0.5% by mass), acetone (water content of 0.5% by mass), and pure water at a mass ratio of 32.0 : 4.7 : 31.0 was added to the polyoxo niobate compound-containing material (precursor-containing material) and stirred, and then a tetramethylammonium hydroxide pentahydrate (TMAH concentration of 50% by mass, water content of 50% by mass) was added and stirred to have a tetramethylammonium hydroxide concentration of 0.7% by mass, thereby preparing a slurry containing 1.0% by mass of niobium in terms of $Nb_2O_5$. The water content of the polyoxo niobate compound dispersion (sample) was 8.5% by mass.

The used amount, pure content, and water content of the precursor-containing material, lower alcohol, pure water, and amine compound solvent-containing material used in each of Examples and Comparative Examples, as well as the water content of the resulting polyoxo niobate compound dispersion ("Nb acid aqueous solution") are shown in Table 1.

In addition, the water content, the molar ratio of the amine compound solvent to Nb, and the ratio of the lower alcohol to the remaining portion were calculated for the polyoxo niobate compound-containing liquid (sample) obtained in each of Examples and Comparative Examples. The results are shown in Table 2.

The polyoxo niobate compounds in the polyoxo niobate compound-containing liquids (samples) obtained in Examples 1 to 9 and Comparative Examples 1 to 5 all had a molar ratio of the content of ammonium ions to the content of niobium (Nb) ($NH_4^+/Nb$) of 0.8, as was the case with each polyoxo niobate compound-containing material (precursor-containing material).

[Table 1]

| | Precursor-containing material | | | Lower alcohol | | | | Pure water[*5] | Amine compound solvent-containing material | | | | | Nb acid aqueous solution |
|---|---|---|---|---|---|---|---|---|---|---|---|---|---|---|
| | Used amount (g) | Nb2O5 (% by mass) | Water content (% by mass) | Type | Used amount (9) | lower alcohol pure content (% by mass) | Water content (% by mass) | Used amount (9) | Type | Used amount (g) | Amine compound solvent (% by mass) | Water content (% by mass) | Water content (% by mass) |
| Example 1 | 13.2 | 53.0 | 35.3 | Ethanol | 48.4 | 99.5 | 0.5 | 0 | TMAH | 8.4 | 50 | 50 | 13.0 |
| Example 2 | 13.2 | 53.0 | 35.3 | Ethanol | 23.7 | 99.5 | 0.5 | 27.5 | TMAH | 5.6 | 50 | 50 | 50.1 |
| Example 3 | 13.2 | 53.0 | 35.3 | Ethanol | 18.4 | 99.5 | 0.5 | 20.9 | Methylamine | 17.5 | 40 | 60 | 51.6 |
| Example 4 | 13.2 | 53.0 | 35.3 | Ethanol | 40.8 | 99.5 | 0.5 | 0 | TEAH | 16.0 | 35 | 65 | 21.8 |
| Example 5 | 13.2 | 53.0 | 35.3 | IBA[*1] | 29.7 | 99 | 1.0 | 0 | TMAH | 9.8 | 50 | 50 | 14.1 |
| | | | | Methanol | 17.3 | 99.8 | 0.2 | | | | | | |
| Example 6 | 13.2 | 53.0 | 35.3 | IBA[*1] | 24.2 | 99 | 1.0 | 0 | TMAH | 7.0 | 50 | 50 | 12.1 |
| | | | | EG[*2] | 39 | 995 | 0.5 | | | | | | |
| | | | | Methanol | 20.3 | 99.8 | 0.2 | | | | | | |
| Example 7 | 13.2 | 53.0 | 35.3 | Ethanol | 15 | 99.5 | 0.5 | 27.8 | Dimethylamine | 14.0 | 50 | 50 | 56.5 |
| Example 8 | 39.6 | 53.0 | 35.3 | Ethanol | 4 | 99.5 | 0.5 | 5.38 | TMAH | 21.0 | 50 | 50 | 42.7 |
| Example 9 | 1.35 | 51.7 | 36.2 | Ethanol | 49 | 99.5 | 0.5 | 4.67 | TMAH | 0.98 | 50 | 50 | 8.5 |
| | | | | Acetone | 14 | 99.5 | 0.5 | | | | | | |
| Comparative Example 1 | 13.2 | 53.0 | 35.3 | (MEK)[*3] | 49.8 | 99 | 1.0 | 0 | TMAH | 7.0 | 50 | 50 | 12.4 |
| Comparative Example 2 | 13.2 | 53.0 | 35.3 | (Acetone)[*4] | 49.8 | 99.5 | 0.5 | 0 | TMAH | 7.0 | 50 | 50 | 12.0 |
| Comparative Example 3 | 13.2 | 53.0 | 35.3 | Ethanol | 52.6 | 99.5 | 0.5 | 0 | TMAH | 4.2 | 50 | 50 | 10.0 |
| Comparative Example 4 | 1.35 | 517 | 36.2 | Ethanol | 48 | 99 5 | 0.5 | 1.70 | TMAH | 0.98 | 50 | 50 | 4.3 |
| | | | | Acetone | 18 | 99.5 | 0.5 | | | | | | |

EP 4 269 355 A1

16

(continued)

| | Precursor-containing material | | | Lower alcohol | | | | Pure water[*5] | Amine compound solvent-containing material | | | | | Nb acid aqueous solution |
|---|---|---|---|---|---|---|---|---|---|---|---|---|---|---|
| | Used amount (g) | Nb2O5 (% by mass) | Water content (% by mass) | Type | Used amount (9) | lower alcohol pure content (% by mass) | Water content (% by mass) | Used amount (9) | Type | Used amount (g) | Amine compound solvent (% by mass) | Water content (% by mass) | Water content (% by mass) |
| Comparative Examples | 1.35 | 51.7 | 36.2 | Ethanol | 32 | 99.5 | 0.5 | 4.67 | TMAH | 0.98 | 50 | 50 | 8.5 |
| | | | | Acetone | 31 | 99.5 | 0.5 | | | | | | |

*1 IBA: isobutyl alcohol (also known as 2-methyl-1-propane!)
*2 EG: ethylene glycol (also known as 1,2-ethanediol)
*3 (MEK): methyl ethyl ketone (also known as 2-butanone) <not a lower alcohol>
*4 (Acetone): another name 2-propanone <not a lower alcohol>
*5 Pure water: those added as pure water (excluding water content in precursor-containing materials, lower alcohols, and amine compound solvent-containing materials)

In Table 1, IBA[*1] indicates isobutyl alcohol (also known as 2-methyl-1-propanol); EG[*2] indicates ethylene glycol (also known as 1,2-ethanediol); (MEK)[*3] indicates methyl ethyl ketone (also known as 2-butanone) <<not a lower alcohol>>; (Acetone)[*4] indicates another name 2-propanone <<not a lower alcohol>>; and Pure water[*5] is for water added as pure water (excluding water contained in precursor-containing materials, lower alcohols, and amine compound solvent-containing materials).

<Transmittance Measurement>

The transmittances of the polyoxo niobate compound dispersion (sample) obtained in each of Examples 1 to 9 and the polyoxo niobate compound-containing liquid (sample) obtained in each of Comparative Examples 1 to 5 were measured using a spectrophotometer.

=Transmittance Measurement Conditions=

- Apparatus: UH4150 spectrophotometer
- Measurement mode: wavelength scan
- Data mode: %T (transmission)
- Measurement wavelength range: 200 to 2,600 nm
- Scanning speed: 600 nm/min
- Sampling interval: 2 nm

The light transmittances at a wavelength of 400 nm were calculated from the measured transmittances. The results are shown in Table 2.

<HSP Values (Hansen Solubility Parameters)>

The HSP values of the solvents contained in the polyoxo niobate compound dispersion (sample) obtained in each of Examples 1 to 9 and the polyoxo niobate compound-containing liquid (sample) obtained in each of Comparative Examples 1 to 5 were calculated using the computer software "Hansen Solubility Parameters in Practice (HSPiP)" by the Y-MB method. The results are shown in Table 2.

<Adhesion Evaluation>

The polyoxo niobate compound dispersion (sample) obtained in each of Examples 1 to 9 or the polyoxo niobate compound-containing liquid (sample) obtained in each of Comparative Examples 1 to 5 was coated once on a soda glass substrate using a spin coater. The soda glass substrate provided with the coated film was calcined in the atmosphere at 200°C for 3 hours, and cooled to 25°C. A cellophane adhesive tape having a size of 24 mm × 15 m (product name: CT-24, manufactured by Nichiban Co., Ltd., thickness of 0.053 mm), as described in JIS Z1522: 2009, was attached to the surface of the coated film. The surface of the adhesive tape was firmly rubbed three times with the fingertips to ensure proper contact between the adhesive tape and the coated film, and then, within 1 minute, the edge of the adhesive tape was grasped and the adhesive tape was peeled off at an angle of 60° ± 10° and at a speed of 0.5 to 1.0 second.
Those having a coated film with a smooth surface and no peeling at all were evaluated as "pass (○)", and those having a coated film that was partially peeled off or not uniform were evaluated as "fail (x)". The results are shown in Table 2.
Those that could not be evaluated because they could not be slurried or made into a solution were designated as unevaluable (-).

[Table 2]

| | Nb$_2$O$_5$ Content (% by mass) | Water content (% by mass) | Amine compound solvent / Nb molar ratio | Lower alcohol/ remaining portion (% by mass) | 400 nm light transmittance (%) | HSP values (Hansen solubility parameters) | | | Film adhesion evaluation |
|---|---|---|---|---|---|---|---|---|---|
| | | | | | | dD (dispersion term) | dP (polar term) | dH (hydrogen bond term) | |
| Example 1 | 10 | 13.0 | 0.87 | 100 | 990 | 158 | 88 | 194 | ○ |
| Example 2 | 10 | 501 | 0.58 | 100 | 99.0 | 158 | 88 | 19.4 | ○ |
| Example 3 | 10 | 516 | 4.27 | 100 | 99.6 | 158 | 88 | 19.4 | ○ |
| Example 4 | 10 | 218 | 0.72 | 100 | 69.7 | 15.8 | 88 | 19.4 | ○ |
| Example 5 | 10 | 141 | 102 | 100 | 98.8 | 15.0 | 81 | 18.3 | ○ |
| Example 6 | 10 | 12.1 | 0.73 | 100 | 99.0 | 150 | 89 | 193 | ○ |
| Example 7 | 10 | 56.5 | 2.95 | 100 | 99.5 | 158 | 88 | 194 | ○ |
| Example 8 | 30 | 42.7 | D.13 | 100 | 97.7 | 158 | 88 | 194 | ○ |
| Example 9 | 1 | 8.5 | 102 | 77 8 | 83.9 | 15.7 | 92 | 16.6 | ○ |
| Comparative Example 1 | 10 | 124 | 0 73 | 0 | unmeasurable*1 | 16.0 | 90 | 51 | × |
| Comparative Example 2 | 10 | 12.0 | 0.73 | 0 | unmeasurable*1 | 155 | 10.4 | 7.0 | × |
| Comparative Example 3 | 10 | 100 | 044 | 100 | 5.9 | 15.8 | 88 | 19.4 | × |
| Comparative Example 4 | 1 | 4.3 | 1.02 | 72.1 | 47.5 | 157 | 92 | 160 | × |
| Comparative Example 5 | 1 | 8.5 | 102 | 508 | poor dispersion*2 | 157 | 96 | 13.3 | × |

'1 : unable to measure light transmittance at a wavelength of 400 nm due to the niobium acid compound-containing liquid separated into two phases
'2: unable to disperse and slurry

For the samples according to Comparative Examples 1 and 2, the light transmittance at a wavelength of 400 nm could not be measured because the polyoxo niobate compound-containing liquid separated into two phases.

For the sample according to Comparative Example 5, the light transmittance at a wavelength of 400 nm could not be measured because of poor dispersibility and inability to slurry.

(Consideration)

The polyoxo niobate compound dispersion (sample) obtained in each of Examples 1 to 9 contained substantially no organic substance having a volatilization temperature of 200°C or higher and halogen elements, as indicated by the raw materials and production methods.

Based on the results of the above Examples and Comparative Examples, as well as the results of the tests conducted by the present inventors to date, it was found that the dispersibility or solubility of the polyoxo niobate compound could be improved by using a lower alcohol and water as the main solvent and adding a primary amine, a secondary amine, a tertiary amine, a quaternary ammonium compound, or a mixture of two or more of them, i.e., the aforementioned amine compound solvent, thereby obtaining a polyoxo niobate compound dispersion in which a part or all of the polyoxo niobate compound was dispersed or dissolved.

With respect to the water content of the polyoxo niobate compound dispersion, the results confirmed that the dispersibility and/or solubility of the polyoxo niobate compound in each Example, when the water content was 8.5% by mass or more, was better than that in Comparative Example 4 in which the water content was 4.3% by mass. Therefore, from the viewpoint of improving the dispersibility and/or solubility of the polyoxo niobate compound, it was found that the amount of water was preferably adjusted to have a water content of 5.0% by mass or more in the polyoxo niobate compound dispersion.

With respect to the content of the amine compound solvent, the results confirmed that the dispersibility and/or solubility of the polyoxo niobate compound in each Example, when the molar ratio of the content of the amine compound solvent to the content of niobium (Nb) was 0.73 or more, was better than that in Comparative Example 3 in which the ratio was 0.44. Therefore, from the viewpoint of improving the dispersibility and/or solubility of the polyoxo niobate compound, it was found that the molar ratio of the content of the amine compound solvent to the content of niobium (Nb) was preferably adjusted to be 0.50 or more.

With respect to the ratio of the lower alcohol, the results confirmed that the dispersibility and/or solubility of the polyoxo niobate compound in each Example, when the ratio of the lower alcohol was 77.8% by mass or more, was better than that in Comparative Example 5 in which the ratio was 50.8% by mass. Therefore, from the viewpoint of improving the dispersibility and/or solubility of the polyoxo niobate compound, it was found that the ratio of the lower alcohol to the contained component other than the component derived from the polyoxo niobate compound, the component derived from the amine compound solvent, and water was preferably adjusted to be 70% by mass or more.

**Claims**

1.  A polyoxo niobate compound dispersion comprising a part or all of a polyoxo niobate compound dispersed or dissolved in a mixed solvent using a lower alcohol and water as a main solvent and containing a primary amine, a secondary amine, a tertiary amine, a quaternary ammonium compound, or two or more of them (also referred to as "amine compound solvent"),

    wherein the content of water is 5.0% by mass or more,
    the content of the amine compound solvent is 0.50 or more in terms of a molar ratio relative to the content of niobium (Nb), and
    the lower alcohol accounts for 70% by mass or more of a contained component (referred to as "remaining portion") other than a component derived from the polyoxo niobate compound, a component derived from the amine compound solvent, and water.

2.  The polyoxo niobate compound dispersion according to claim 1, comprising 0.1% by mass to 40% by mass of niobium in terms of $Nb_2O_5$.

3.  The polyoxo niobate compound dispersion according to claim 1 or 2, having a light transmittance at a wavelength of 400 nm of 65% or more.

4.  A method for producing a polyoxo niobate compound dispersion comprising mixing a polyoxo niobate compound (referred to as "precursor") that is a compound containing polyoxo niobate and ammonium ions, a lower alcohol and/or water, and a primary amine, a secondary amine, a tertiary amine, a quaternary ammonium compound, or two or more of them (also referred to as "amine compound solvent").

5. The method for producing a polyoxo niobate compound dispersion according to claim 4, wherein the precursor has a molar ratio of the content of ammonium ions to the content of Nb ($NH_4^+$/Nb) of 0.50 or more.

6. The polyoxo niobate compound dispersion according to any one of claims 1 to 3, being evaluated as pass in the following adhesion evaluation,
wherein the polyoxo niobate compound dispersion is coated once on a soda glass substrate using a spin coater, the soda glass substrate provided with the coated film is calcined at 200°C for 3 hours and cooled to 25°C, a cellophane adhesive tape having a size of 24 mm × 15 m, according to Japanese Industrial Standards (JIS) Z1522:2009, is attached to the surface of the coated film, within 1 minute after rubbing the surface of the adhesive tape three times with fingertips, the edge of the adhesive tape is grasped and the adhesive tape is peeled off at an angle of 60° ± 10° and at a speed of 0.5 to 1.0 second, and the polyoxo niobate compound dispersion is evaluated as "pass" when the surface of the coated film is smooth and there is no peeling at all.

### INTERNATIONAL SEARCH REPORT

| International application No. |
| --- |
| **PCT/JP2021/046954** |

**A. CLASSIFICATION OF SUBJECT MATTER**

***C01G 33/00*** (2006.01)i
FI: C01G33/00 A

According to International Patent Classification (IPC) or to both national classification and IPC

**B. FIELDS SEARCHED**

Minimum documentation searched (classification system followed by classification symbols)
 C01G33/00

Documentation searched other than minimum documentation to the extent that such documents are included in the fields searched
 Published examined utility model applications of Japan 1922-1996
 Published unexamined utility model applications of Japan 1971-2022
 Registered utility model specifications of Japan 1996-2022
 Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-081220 A (TAKI CHEM. CO., LTD.) 27 April 2015 (2015-04-27) paragraphs [0005], [0018]-[0019], [0037]-[0048], table 1 | 1-3, 6 |
| A | | 4-5 |
| X | JP 2018-127392 A (TAKI CHEM. CO., LTD.) 16 August 2018 (2018-08-16) paragraphs [0046], [0060]-[0061] | 4-5 |
| A | | 1-3, 6 |
| A | JP 2018-104242 A (TAKI CHEM. CO., LTD.) 05 July 2018 (2018-07-05) entire text, all drawings, particularly, paragraph [0046] | 1-6 |
| A | JP 2007-005161 A (KAO CORP.) 11 January 2007 (2007-01-11) entire text, all drawings | 1-6 |
| A | JP 2005-306641 A (TAKI CHEM. CO., LTD.) 04 November 2005 (2005-11-04) entire text, all drawings | 1-6 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 February 2022** | **22 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/046954**

| Patent document cited in search report | | | Publication date (day/month/year) | Patent family member(s) | Publication date (day/month/year) |
|---|---|---|---|---|---|
| JP | 2015-081220 | A | 27 April 2015 | (Family: none) | |
| JP | 2018-127392 | A | 16 August 2018 | (Family: none) | |
| JP | 2018-104242 | A | 05 July 2018 | (Family: none) | |
| JP | 2007-005161 | A | 11 January 2007 | (Family: none) | |
| JP | 2005-306641 | A | 04 November 2005 | (Family: none) | |

Form PCT/ISA/210 (patent family annex) (January 2015)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015081220 A

- JP 2018127392 A

**Non-patent literature cited in the description**

- **SEIJI YAMAZOE.** Base Catalytic Applications of Multivalent Anion Metal Oxide Clusters. The Chemical Society of Japan, 2018

- *HSP for Beginners, https://pirika.com/HSP/JP/Examples/Docs/4Beginner.htm*